# EUROPÄISCHE PATENTANMELDUNG

(11) **EP 3 456 467 A2**
(43) Veröffentlichungstag der Anmeldung: **20.03.2019**
(21) Anmeldenummer: 18191491.2
(22) Anmeldetag: 29.08.2018
(51) Int. Cl.: B23Q 11/10, B23Q 11/12

(54) **MOTORSPINDEL FÜR EINE WERKZEUGMASCHINE MIT INTEGRIERTER KÜHLUNG UND DREHDURCHFÜHRUNGSMODUL**

(30) Priorität: 14.09.2017 DE 102017008654
(71) Anmelder: Franz Kessler GmbH, 88422 Bad Buchau (DE)
(72) Erfinder: Gerst, Manuel, 88400 Biberach an der Riß (DE); Tüllmann, Udo, 99817 Eisenach (DE); van Sprang, Joachim, 88213 Ravensburg (DE)
(74) Vertreter: Thum, Bernhard

(57) **Zusammenfassung**

Die Erfindung betrifft eine Motorspindel (10) für eine Maschine, insbesondere für eine Werkzeugmaschine (12), umfassend:
- ein Spindelgehäuse (14) zur stationären Anbringung an der Maschine,
- eine aus dem Spindelgehäuse (14) entnehmbare Spindelanordnung (40) mit einem in einer integrierten Lageranordnung (42, 44) relativ zum Spindelgehäuse (14) drehbar gelagerten Rotor (46), und
- einen Spannmechanismus (56) für ein Werkzeug, der über einen in dem Spindelgehäuse (14) in einem Ringzylinder (26) bewegbaren Spannkolben (28) betätigbar ist,
wobei die Spindelanordnung (40) mit einer inneren Kühlung ausgebildet ist, die über eine Kühlmittelzufuhr mit einem Kühlfluid versorgbar ist, wobei die Kühlmittelzufuhr eine Drehdurchführung aufweist, die eine Schnittstelle zwischen einem stationären Bauteil und einem rotierenden Bauteil der Kühlmittelzufuhr aufweist,
und wobei die Lageranordnung (42, 44) bei einer Entnahme der Spindelanordnung (40) aus dem Spindelgehäuse (14) mit entnehmbar ist.

Bei dieser Motorspindel (10) ist vorgesehen, dass die Drehdurchführung als ein Drehdurchführungsmodul (30) ausgebildet ist, das in einem Bereich an dem Spindelgehäuse (14) angeordnet ist, der axial außerhalb des Ringzylinders (26) liegt.

## Beschreibung

Die vorliegende Erfindung betrifft eine Motorspindel für eine Maschine, insbesondere für eine Werkzeugmaschine, umfassend:
- ein Spindelgehäuse zur stationären Anbringung an der Maschine,
- eine aus dem Spindelgehäuse entnehmbare Spindelanordnung mit einem in einer integrierten Lageranordnung relativ zum Spindelgehäuse drehbar gelagerten Rotor, und
- einen Spannmechanismus für ein Werkzeug, der über einen in dem Spindelgehäuse in einem Ringzylinder bewegbaren Spannkolben betätigbar ist,
wobei die Spindelanordnung mit einer inneren Kühlung ausgebildet ist, die über eine Kühlmittelzufuhr mit einem Kühlfluid versorgbar ist, wobei die Kühlmittelzufuhr eine Drehdurchführung aufweist, die eine Schnittstelle zwischen einem stationären Bauteil und einem rotierenden Bauteil der Kühlmittelzufuhr aufweist,
und wobei die Lageranordnung bei einer Entnahme der Spindelanordnung aus dem Spindelgehäuse mit entnehmbar ist.

Eine solche Motorspindel ist aus dem Dokument EP 1 787 744 A bekannt. Ein Vorteil dieser Motorspindel liegt darin, dass sich die Spindelanordnung mit ihrer integrierten Lageranordnung zu Wartungs- oder Reparaturzwecken als Einheit aus dem Spindelgehäuse entnehmen und anschließend wieder ohne großen Montageaufwand in das Spindelgehäuse einsetzen lässt. Dabei bleibt die Lageranordnung in ihrer Konfiguration erhalten, ohne dass eine aufwändige Ausrichtung oder Verspannung der Lager beim erneuten Einsetzen der Spindelanordnung in das Spindelgehäuse erforderlich wäre. Ferner ist bei dieser Motorspindel vorgesehen, dass die Drehdurchführung für die Kühlmittelzufuhr ein einfaches Entnehmen und Wiedereinsetzen der Spindelanordnung in das Spindelgehäuse zulässt, wobei in der Folge eine zuverlässige und leckagefreie Kühlmittelzufuhr gewährleistet ist. Allerdings hat sich bei dieser Motorspindel aus dem Stand der Technik gezeigt, dass die Integration der Drehdurchführung in den Ringzylinder aufgrund der räumlichen Begrenzung des Ringzylinders problematisch ist. Dazu kommt, dass die Leckage-Kühlfluid bei einer derartigen integrierten Drehdurchführung nur schlecht abführbar ist. Auch eine Wartung oder Reparatur der Drehdurchführung ist aufgrund der Integration innerhalb des Ringzylinders umständlich. Dies gilt umso mehr, als dass die Drehdurchführung mit dem rotierenden Teil der Spindelanordnung mitrotierende Bauteile enthält. Ferner beeinträchtigen mögliche Rundlauffehler der Motorspindel die Funktion und Lebensdauer der Drehdurchführung.

Als weiterer Stand der Technik wird auf das Dokument EP 1 958 718 B1 verwiesen. Auch dieses Dokument zeigt eine in dem Ringzylinder integrierte Drehdurchführung mit den vorstehend beschriebenen Nachteilen. Ferner verbleibt bei diesem Stand der Technik ein Teil der Lageranordnung der Spindelanordnung im Spindelgehäuse, was eine aufwändige Nachjustierung der Lageranordnung bei Wiedereinsetzen der Spindelanordnung in das Spindelgehäuse erfordert.

Das Dokument EP 2 433 741 A1 beschreibt eine Anordnung, bei der die Lageranordnung der Spindelanordnung mit ihren jeweiligen Lageraußenringen direkt in das Spindelgehäuse eingesetzt wird. Dies bedeutet, dass die Außenringe der Lager direkt in dem Spindelgehäuse aufgenommen werden. Im Betrieb kann es aufgrund von Vibrationen an den Außenringen der Lager, insbesondere der Loslager der jeweiligen Lageranordnung, teilweise zu Passungsrost kommen. In einem solchen Fall wird die Motorspindel trotz der Möglichkeit zum Rotortausch unbrauchbar, weil das Spindelgehäuse, das gerade in der Maschine verbleiben soll, durch den entstehenden Passungsrost unbrauchbar wird. Ferner erfordert das unmittelbare Einsetzen der Lageraußenringe in das Spindelgehäuse ein vergleichsweise großes Spiel, um den Einsatzvorgang überhaupt zugunsten eines einfachen Spindeltausches zu ermöglichen. Ein solches Spiel soll aber zugunsten des Rundlaufs gerade vermieden werden. Ein weiterer Nachteil dieser Anordnung besteht darin, dass ein relativ langes drehbar ausgebildetes Übergaberohr für die Kühlmittelzufuhr vorgesehen ist, das bei einer Entnahme der Spindelanordnung aus dem Spindelgehäuse im Spindelgehäuse verbleibt. Eine Montage der Spindelanordnung in dem Spindelgehäuse erfordert eine vorsichtige Handhabung zum Einführen dieses relativ langen Übergaberohrs in die Spindelwelle. Schließlich zeigt diese Anordnung auch die bereits vorstehend erwähnten Nachteile bezüglich einer Integration der Drehdurchführung innerhalb des Ringzylinders.

Das Dokument EP 0 780 192 A1 beschreibt ebenfalls eine Motorspindel, bei der die Entnahme der Spindelanordnung verhältnismäßig aufwendig ist. Insbesondere wird bei dieser Anordnung die der Drehdurchführung naheliegende Lageranordnung im Falle einer Entnahme der Spindelanordnung aufgelöst und muss beim Wiedereinsetzen der Spindelanordnung neu montiert werden. Ferner ist die Integration der Drehdurchführung für die Kühlmittelzufuhr innerhalb des Ringzylinders kompliziert mit einer Vielzahl von Einzelteilen ausgeführt, was die Fertigung kostenintensiv macht und eine Wartung erschwert.

Zum weiteren Stand der Technik wird auf die Dokumente DE 100 27 750 C5 und DE 195 32 976 A1 verwiesen. Diese zeigen Motorspindeln herkömmlicher Art, jedoch ohne Kühlmittelzufuhr für ein Kühlfluid. Derartige ungekühlte Motorspindeln haben wegen Ihrer Tendenz beispielsweise bei hohen Spindeldrehzahlen sich unerwünscht stark zu erhitzen, nur eingeschränkte Einsatzmöglichkeiten.

Es ist eine Aufgabe der vorliegenden Erfindung, eine Motorspindel der eingangs bezeichneten Art sowie eine hiermit ausgestaltete Werkzeugmaschine bereitzustellen, bei der der Aufbau und die Anbringung der Drehdurchführung gegenüber dem Stand der Technik wartungsfreundlicher und vereinfacht ist.

Diese Aufgabe wird mit einer Motorspindel der eingangs bezeichneten Art gelöst, die die Möglichkeit zum einfachen Rotortausch bietet und bei der vorgesehen ist, dass die Drehdurchführung als ein Drehdurchführungsmodul ausgebildet ist, das in einem Bereich an dem Spindelgehäuse angeordnet ist, der axial außerhalb des Ringzylinders liegt.

Ein wesentlicher Aspekt der vorliegenden Erfindung ist der einfache Rotortausch, d. h. die Möglichkeit, die Spindelanordnung aus dem Spindelgehäuse zu Wartungszwecken, Reparaturzwecken oder zum Austausch zu entnehmen und die gewartete, reparierte oder eine neue Spindelanordnung in das in der Maschine verbleibende Spindelgehäuse wieder einzusetzen. Diese Eigenschaft zum vereinfachten Rotortausch wird mit den folgenden Merkmalen kombiniert.

Die vorliegende Erfindung trägt bei einer Motorspindel mit der Eigenschaft des vereinfachten Rotortausches, d. h. der Möglichkeit einer Entnahme der Spindelanordnung aus dem Spindelgehäuse unter Aufrechterhaltung der Lageranordnung, den vorstehend im Hinblick auf den Stand der Technik geschilderten Problemen des geringen zur Verfügung stehenden Raums bei einer Integration der Drehdurchführung innerhalb des Ringzylinders Rechnung und sieht vor, die Drehdurchführung zu modularisieren, sodass diese als separate Einheit handhabbar ist. Ein derartiges Drehdurchführungsmodul gemäß der vorliegenden Erfindung lässt sich separat als eine Einheit handhaben und an einer geeigneten Position am Spindelgehäuse anbringen. So ist es möglich, an einem der entnehmbaren Spindelanordnung entfernten Ende des Spindelgehäuses eine entsprechende Befestigungsöffnung oder einen Fixierflansch vorzusehen, in der bzw. an dem das Drehdurchführungsmodul am Spindelgehäuse anbringbar ist. Beispielsweise kann erfindungsgemäß vorgesehen sein, dass das Drehdurchführungsmodul mittels eines Montageflansches an das Spindelgehäuse stirnseitig angeflanscht ist.

Ferner kann das Drehdurchführungsmodul erfindungsgemäß als separate Einheit hergestellt, gewartet und ausgewechselt werden, ohne in zeitraubender Weise an einer im Spindelgehäuse mit einer Mehrzahl von Einzelkomponenten bzw. Einzelteilen integriert angeordneten Drehdurchführung entsprechende Arbeitsschritte durchführen zu müssen, wie beim Stand der Technik der Fall. Dazu kommt, dass etwaiges Leckagekühlmittel aus einem solchen separaten Drehdurchführungsmodul einfacher abführbar ist.

Erfindungsgemäß wird die Drehdurchführung axial beabstandet zu dem Bereich angeordnet, in dem der Ringzylinder innerhalb des Spindelgehäuses angeordnet ist. Dadurch ist es möglich, auch einen größeren Gestaltungsspielraum für den Ringzylinder zu erhalten, beispielsweise derart, dass größere hydraulisch wirksame Flächen zum Betätigen eines im Ringzylinder aufgenommenen Spannkolbens für den Spannmechanismus geschaffen werden. So können höhere Spannkräfte aufgebaut werden, ohne den Gesamtbauraum der Motorspindel in radialer Richtung zu vergrößern.

Der Erfindung lassen sich die vorstehend geschilderten Nachteile bezüglich des Stands der Technik überwinden. So ermöglicht die vorliegende Erfindung die Aufrechterhaltung der Lageranordnung und damit auch die Vermeidung von einer unmittelbaren Aufnahme der äußeren Lageringe der Lageranordnung in dem Spindelgehäuse.

Eine Weiterbildung der Erfindung sieht vor, dass die Lageranordnung eine - in axialer Richtung betrachtet - nahe dem Drehdurchführungsmodul angeordnete erste Lagerbaugruppe und eine von dem Drehdurchführungsmodul entfernt angeordnete zweite Lagerbaugruppe aufweist, über die sich der Rotor relativ zu dem Spindelgehäuse abstützt. Die beiden Lagerbaugruppen sind in hinreichender axialer Entfernung voneinander vorgesehen, um die Motorspindel präzise zu lagern.

Ferner kann in diesem Zusammenhang vorgesehen sein, dass die erste und die zweite Lagerbaugruppe jeweils eine im eingebauten Zustand drehfest angeordnete Lagerbuchse aufweisen, in der die jeweilige Lagerbaugruppe aufgenommen ist, wobei die Lagerbuchse jeweils bei einer Entnahme der Spindelanordnung aus dem Spindelgehäuse mit entnehmbar ist. Durch die Anordnung der Lagerbaugruppen innerhalb von im eingebauten Zustand drehfesten Lagerbuchsen, die mit der Spindelanordnung mit entnehmbar sind, lässt sich eine hinsichtlich der Lagerverspannung jeweils vormontierte Lagerbaugruppe bereitstellen, die ein beliebig häufiges Entnehmen und Wiedereinsetzen der Spindelanordnung ohne Nachjustierung der Lageranordnungen ermöglicht.

Vorzugsweise kann in diesem Zusammenhang vorgesehen sein, dass die erste und die zweite Lagerbaugruppe jeweils ein Paar von Wälzlagern aufweisen, die in vorbestimmter Ausrichtung zueinander angeordnet sind. Insbesondere ist es in diesem Zusammenhang möglich, dass das Paar von Wälzlagern zwei Schrägkugellager aufweist, die in einer X-Anordnung oder in einer O-Anordnung in der Lagerbuchse aufgenommen sind. Wie vorstehend bereits angedeutet, sieht eine Weiterbildung der Erfindung vor, dass das Paar von Wälzlagern in einer fest zueinander verspannten Anordnung in der zugeordneten Lagerbuchse aufgenommen ist. Ferner kann in diesem Zusammenhang vorgesehen sein, dass die Lagerbuchse mit wenigstens einer federvorgespannten oder/und hydraulisch betätigbaren oder/und pneumatisch betätigbaren Lagerspannvorrichtung für den Betrieb der Motorspindel vorspannbar ist.

Eine Weiterbildung der Erfindung sieht vor, dass die Spindelanordnung mit einem axialen Übergaberohr ausgebildet ist, das sich im montierten Zustand von einer Spindelwelle ausgehend durch den Ringzylinder und den Spannkolben hindurch in das Drehdurchführungsmodul hinein erstreckt.

Um das Drehdurchführungsmodul beliebig im Bereich der Spindelgehäuses anordnen zu können, insbesondere auch in größeren axialen Abständen von der entnehmbaren Spindelanordnung auch unter Anwendung eines relativ langen Übergaberohrs, kann erfindungsgemäß ferner vorgesehen sein, dass das Drehdurchführungsmodul eine Drehdurchführungs-Lageranordnung aufweist, die das rotierende Bauteil der Kühlmittelzufuhr mittelbar oder unmittelbar gegenüber dem Spindelgehäuse lagert. Dadurch ist es möglich, auch größere Distanzen innerhalb der Motorspindel mit rotierenden Bauteilen bis hin zur Drehdurchführung durch das Übergaberohr zu überbrücken, ohne Gefahr zu laufen, dass dabei Unwuchten oder Schwingungen auftreten. Durch das Vorsehen der Drehdurchführungs-Lageranordnung kann ferner vermieden werden, dass im Betrieb auftretenden Vibrationen die Funktion und Lebensdauer der Drehdurchführung beeinträchtigen.

In diesem Zusammenhang kann in einer vorteilhaften Weiterbildung der Erfindung vorgesehen sein, dass das Übergaberohr in dem Drehdurchführungsmodul in dem rotierenden Bauteil aufgenommen und über dieses gelagert ist. Gemäß einer Ausführungsvariante der Erfindung ist vorgesehen, dass die Drehdurchführungs-Lageranordnung wenigstens ein Wälzlager oder Gleitlager aufweist.

Um eine hinreichend dichte Schnittstelle zur Übergabe des Kühlfluid vorzusehen, sieht eine Weiterbildung der Erfindung vor, dass die Drehdurchführung dazu ausgebildet ist, das rotierende Bauteil und das stationäre Bauteil unter Federkraft oder/und hydraulisch oder/und pneumatisch dichtend aneinander zu drücken. Im Falle einer mit Federkraft beaufschlagten Schnittstelle wird beispielsweise das stationäre Teil über eine vorgespannte Druckfeder in axialer Richtung auf das rotierende Bauteil der Drehdurchführung gedrückt. Zusätzlich oder alternativ ist es möglich, über das zur Verfügung stehende gasförmige oder flüssige Kühlfluid das stationäre Bauteil und das rotierende Bauteil dichtend aneinander zu drücken. Dies kann beispielsweise erst dann erfolgen, wenn das Kühlfluid einen Mindest-Druckwert überschreitet. Auch eine Kombination von Federvorspannung und fluidabhängiger Vorspannung ist erfindungsgemäß möglich.

Eine Weiterbildung der Erfindung sieht vor, dass der Rotor an einem radial äußeren Abschnitt mit einem Klemmelement versehen ist, das über einen hydraulisch oder pneumatisch oder elektromagnetisch betätigbaren Aktuator gegen einen Halteabschnitt des Spindelgehäuses zum drehfesten Festlegen des Rotors relativ zum Spindelgehäuse klemmbar ist. Dieser Aspekt der Drehfestlegung des Rotors relativ zu Spindelgehäuse kann separat von den vorangehend diskutierten Erfindungsaspekten betrachtet werden. Eine solche Festlegung des Rotors bietet sich beispielsweise dann an, wenn die Spindelanordnung in einer Drehmaschine zur Aufnahme eines Drehwerkzeugs eingesetzt wird, beispielsweise zur Aufnahme eines Drehmeißels, das bzw. der in bestimmten Bearbeitungssituationen gegen eine unerwünschte Drehbewegung festgelegt werden muss.

In diesem Zusammenhang kann ferner vorgesehen sein, dass das Klemmelement als eine mit dem Rotor drehfest verbundene radial verlaufende deformierbare Klemmplatte ausgebildet ist, die über den Aktuator in klemmenden Eingriff mit dem Halteabschnitt bringbar ist. Eine solche Klemmplatte reicht aus, um über ihren Umfang zur Drehfestlegung über den Aktuator festgeklemmt zu werden. Wird sie vom Aktuator freigegeben, so verformt sich diese elastisch zurück in ihren Ausgangszustand und erlaubt eine reibungsfreie Drehung des Rotors relativ zum Spindelgehäuse.

Ferner kann in diesem Zusammenhang vorgesehen sein, dass der Aktuator in Form eines Kolbens ausgebildet ist, der in eine das Klemmelement freigebende Stellung vorgespannt und durch Beaufschlagung mit einem hydraulischen oder pneumatischen Fluid betätigbar ist. Ein solcher Aktuator kann über ein zusätzliches Federelement in eine Ausgangsstellung vorgespannt sein, in der er das Klemmelement freigibt.

In Einzelfällen ist es in der Automatisierungstechnik erforderlich, Maschinen mit einem Umrichter oder einer Kombination aus einem Gleichrichter und einem Umrichter auszugestalten. Im Zusammenhang mit der vorliegenden Erfindung, die eine einfache Entnahme und ein einfaches Wiedereinsetzen der Spindelanordnung in das Spindelgehäuse vorsieht, aber auch unabhängig von diesem Gedanken, kann vorgesehen sein, einen Umrichter oder eine Kombination aus einem Gleichrichter und einem Umrichter unmittelbar Spindelgehäuse fest anzuordnen, wobei der Umrichter oder die Kombination aus Gleichrichter und Umrichter bei einer Entnahme der Spindelanordnung aus dem Spindelgehäuse am Spindelgehäuse verbleibt. Dies erlaubt es, im Falle einer Wartung oder eines Spindeltausches Gleichrichter bzw. die Kombination aus Gleichrichter und Umrichter nicht mit tauschen zu müssen, sondern am Spindelgehäuse zu belassen. Dadurch können die vorzunehmenden Wartungs- oder Reparatur-Arbeitsschritte zusätzlich erheblich vereinfacht werden. Der Umrichter bzw. die Kombination aus Gleichrichter und Umrichter kann bzw. können mit einer zusätzlichen Steuerung versehen sein, die diesen Komponenten unmittelbar zugeordnet ist und im Falle einer Entnahme der Spindelanordnung am Spindelgehäuse verbleibt.

Die Erfindung betrifft ferner eine Werkzeugmaschine, die mit einer Motorspindel der vorstehend beschriebenen Art ausgebildet ist.

Ferner betrifft die Erfindung ein Verfahren zum Einsetzen und Entnehmen einer Spindel aus einem Spindelgehäuse bei einer Motorspindel der vorstehend beschriebenen Art, wobei der Rotor samt seiner Lageranordnung aus dem Spindelgehäuse entnehmbar ist und wobei ferner das Drehdurchführungsmodul unabhängig von dem Rotor von dem Spindelgehäuse entfernbar und an diesem anbringbar ist.

Die Erfindung wird im Folgenden beispielhaft anhand der beigefügten Figuren erläutert. Es stellen dar:
- Figur 1: eine achsenthaltende Längsschnittansicht einer Motorspindel im montierten Zustand gemäß einer ersten Ausführungsform der Erfindung;
- Figuren 2a bis 2c: achsenthaltende Längsschnitt-Explosionsansichten gemäß Figur 1, jedoch in verschiedenen Montagezuständen; und
- Figur 3: eine achsenthaltende Längsschnittansicht einer Motorspindel im montierten Zustand gemäß einer zweiten Ausführungsform der Erfindung.

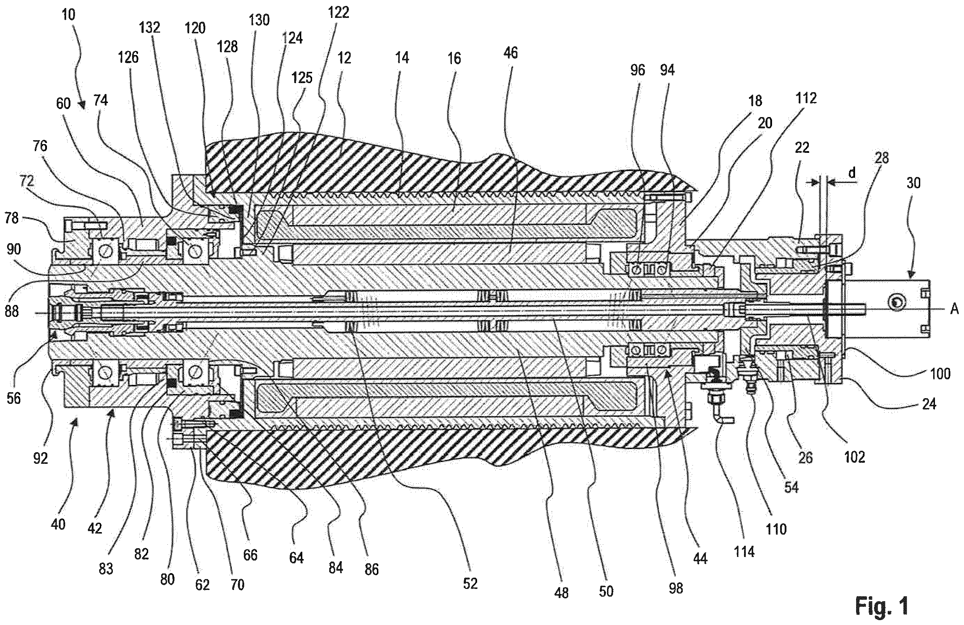

In Figur 1 ist eine die Längsachse A enthaltende Längsschnittansicht einer erfindungsgemäßen Motorspindel im montierten Zustand gezeigt, die dort allgemein mit 10 bezeichnet ist. Die erfindungsgemäße Motorspindel 10 ist in einer Aufnahmeöffnung einer lediglich schematisch abschnittsweise angedeuteten Werkzeugmaschine 12 angeordnet und dort fixierbar.

Die Motorspindel 10 umfasst ein Spindelgehäuse 14, das stationär in der Werkzeugmaschine 12 angebracht wird. In dem Spindelgehäuse 14 ist ein elektromagnetischer Stator 16 vorgesehen, der in herkömmlicher Weise elektrisch ansteuerbar ist. Ferner umfasst das Spindelgehäuse 14 ein Flanschelement 18, das an dem in Figur 1 rechten Ende des Spindelgehäuses 14 stirnseitig angeflanscht ist. Das Flanschelement 18 weist an seinem radial inneren Bereich einen Kopplungsansatz 20 auf, an dem ein weiteres Gehäuseteil 22 angebracht ist. Das weitere Gehäuseteil 22 bildet mit einem daran angebrachten Einsatzteil 24 einen hohlen Ringzylinder 26 aus, in dem ein Spannkolben 28 in axialer Richtung verlagerbar dichtend geführt ist. Der Spannkolben 28 ist Teil eines in der Motorspindel 10 integrierten Werkzeugspannsystems, das im Folgenden noch im Detail beschrieben werden wird.

Ferner dient das Einsatzteil 24 zur Anbringung einer modulartig ausgebildeten Drehdurchführung 30 für ein Kühlfluid zum Kühlen der Motorspindel 10, wobei die modulartig ausgebildete Drehdurchführung 30 nachfolgend noch näher beschrieben werden wird.

Wendet man sich wiederum dem Spindelgehäuse 14 zu, so erkennt man, dass in dessen radial inneren Bereich eine Spindelanordnung 40 angeordnet ist. Die Spindelanordnung 40 ist als Ganzes aus dem Spindelgehäuse 14 entnehmbar bzw. in dieses einsetzbar, beispielsweise zu Wartungszwecken, zu Reparaturzwecken oder um vollständig gegen eine andere Spindelanordnung ausgetauscht zu werden.

Die Spindelanordnung 40 umfasst einen Rotor 46, der über eine erste Lageranordnung 42 in Figur 1 auf der linken Seite und eine zweite Lageranordnung 44 in Figur 1 auf der rechten Seite drehbar um die Längsachse A gelagert ist. Der Rotor 46 ist in herkömmlicher Weise ausgebildet und vermittels des Stators 16 durch geeignete Ansteuerung elektromagnetisch drehantreibbar.

Der Rotor 46 weist eine Spindelwelle 48 auf, die in ihrem Inneren hohl ausgebildet ist. Durch die Spindelwelle 48 erstreckt sich in deren radial inneren Bereich ein Rohrelement 50 als eine Komponente des Werkzeugspannsystems, das in axialer Richtung relativ zur Spindelwelle 48 verlagerbar ist und mittels eines schematisch angedeuteten Tellerfederpakets 52 in Figur 1 nach rechts in einen Ausgangszustand vorgespannt ist. Das Rohrelement 50 ist an seinem in Figur 1 rechten Ende mit einem Flanschteil 54 versehen, das an diesem fixiert ist. Das Flanschteil 54 erstreckt sich derart weit radial auswärts, dass es radial mit dem in Figur 1 linken Ende des Spannkolbens 28 überlappt und bei dessen Betätigung mit diesem in Wechselwirkung tritt. Insbesondere lässt sich durch eine Verlagerung des Spannkolbens 28 in Figur 1 nach links, indem der Spannkolben 28 innerhalb des Ringzylinders 26 mit Hydraulikfluid druckbeaufschlagt wird und in Figur 1 in axialer Richtung nach links verlagert wird, das Rohrelement 50 entgegen der Vorspannkraft des Tellerfederpakets 52 in Figur 1 nach links verlagern und so ein an sich bekannter Werkzeugspannmechanismus 56 zum Einsetzen eines Kopplungselements (nicht gezeigt) eines beliebigen Bearbeitungswerkzeug öffnen. Bei Freigabe des Spannkolbens 28 schließt sich Werkzeug wieder in bekannter Weise durch die Rückstellwirkung des Tellerfederpakets 52, wobei das Rohrelement 50 in Figur 1 nach rechts zurück verlagert wird.

Wendet man sich nun den beiden Lageranordnungen 42 und 44 zu, so erkennt man, dass die Lageranordnung 42 ein Lagergehäuse 60 aufweist, das in seinem radial äußeren Bereich mit einem Flanschabschnitt 62 ausgebildet ist. Der Flanschabschnitt 62 dient dazu, die Spindelanordnung 40 an dem Spindelgehäuse 14 im Einbauzustand innerhalb der Werkzeugmaschine 12 über mehrere Befestigungsschrauben 64 zu fixieren. Ferner enthält das Lagergehäuse 60 eine Reihe von Aufnahmeöffnungen 66, die mit korrespondierenden Durchgangsbohrungen 68 im Spindelgehäuse korrespondieren und über die mit geeigneten Befestigungsschrauben die gesamte Spindelanordnung 40 samt dem Spindelgehäuse 14 an der Werkzeugmaschine befestigbar ist. Hierzu weist das Spindelgehäuse 14 ferner einen Flanschabschnitt 70 auf, der sich entsprechend dem Flanschabschnitt 62 des Lagergehäuses 60 radial auswärts erstreckt.

Das Lagergehäuse 60 nimmt in seinem Inneren zwei Schrägkugellager 72, 74 auf, die im gezeigten Beispielsfall in an sich bekannter Weise in einer O-Anordnung ausgebildet und zueinander verspannt sind. Das Schrägkugellager 72 liegt mit seiner radial äußeren Lagerschale an einem sich radial einwärts erstreckenden Kragen 76 des Lagergehäuses 60 an und stützt sich an diesem in axialer Richtung ab. Über einen Lagerdeckel 78 wird das Schrägkugellager 72 in dem Lagergehäuse 60 fixiert. Das zweite Schrägkugellager 74 ist in axialer Richtung verschiebbar in einer Gleitbuchse 80 aufgenommen. Die Gleitbuchse 80 ist mit einer Mehrzahl von Axialbohrungen über ihren Umfang hinweg versehen, wobei in jeder der Axialbohrungen eine in axialer Richtung wirksame Druckfeder 82 aufgenommen ist, mit der sich die Gleitbuchse 80 federnd in Figur 1 nach rechts an einem radial einwärts erstreckenden Kragen 83 des Lagergehäuses 60 abstützt. Die Gleitbuchse 80 stützt das zweite Schrägkugellager 74 in axialer Richtung nach links ab. Von rechts wird das Schrägkugellager 74 über eine an der Gleitbuchse 80 verschraubte Lagerscheibe 84 gehalten. Zur Abstützung der radial inneren Lagerschalen der Schrägkugellager 72, 74 ist auf der Spindelwelle 48 eine Schulter 86 vorgesehen. Ferner erstrecken sich auf der Spindelwelle 48 entsprechende Distanzhülsen 88,90 sowie eine stirnseitig angeordnete Spindelscheibe 92.

Die zweite in Figur 1 rechts liegende Lageranordnung 44 weist ebenfalls zwei Schrägkugellager 94, 96 auf, die in einer O-Anordnung vorgesehen und zueinander verspannt sind. Die beiden Schrägkugellager 94 und 96 sind innerhalb des Flanschelements 18 mit einer Gleitbuchse 98 mit geringem Axialspiel zur axialen Verlagerung aufgenommen. Die Lageranordnung 44 bildet sozusagen ein Loslager für die Spindelanordnung 40 in axialer Richtung betrachtet.

Wendet man sich nun dem Drehdurchführungsmodul 30 zu, so erkennt man, dass dieses in einer entsprechenden Öffnung von in Figur 1 rechter Seite aus in das Einsatzteil 24 einsetzbar und über eine an dem Drehdurchführungsmodul 30 integral oder als separates Bauelement angebrachte Fixierplatte 100 flanschartig an dem Einsatzteil 24 durch Verschraubung fixierbar ist. Das Drehdurchführungsmodul 30 ist mit dem rechten Ende des Rohrelements 50 über ein Übergaberohr 102 verbunden, sodass der Hohlraum des Rohrelements 50 über den axial verlaufenden Hohlraum des Übergaberohrs 102 zur Übergabe von Kühlfluid aus dem Drehdurchführungsmodul 30 fluidisch verbunden ist. Das Drehdurchführungsmodul 30 weist in seinem Inneren eine separate Lageranordnung (nicht gezeigt) auf, die das Übergaberohr 102 um die Längsachse A drehlagert. Dabei ist zu beachten, dass sich das Übergaberohr 102 zusammen mit dem Rohrelement 50 und der dieses aufnehmenden Spindelwelle 48 mitdreht, wohingegen das Gehäuse des Drehdurchführungsmoduls 30 an dem drehfesten Einsatzfall 24 fixiert ist.

Innerhalb des Drehdurchführungsmoduls 30 gibt es eine Schnittstelle zwischen rotierenden Bauteilen und drehfesten, d. h. stationären Bauteilen. Diese Schnittstelle innerhalb des Drehdurchführungsmoduls 30 ist deshalb von Bedeutung, weil über diese Schnittstelle eine leckagefreie Übergabe des Kühlfluids erfolgen muss. Hierzu dient ein das Übergaberohr 102 aufnehmendes, innerhalb des Drehdurchführungsmoduls drehbar gelagertes rotierendes Bauteil sowie ein mit diesem in dichtende Anlage bringbares drehfestes, d. h. stationäres Bauteil. Das stationäre Bauteil kann dadurch in dichtende Anlage mit dem rotierenden Bauteil gebracht werden, dass dieses entweder auf das rotierende Bauteil zu federvorgespannt ist oder durch Zuführung des Kühlfluids fluidisch, d. h. hydraulisch oder pneumatisch, je nach verwendetem Kühlfluid, axial gegen das rotierende Bauteil verspannt wird. Die innerhalb des Drehdurchführungsmoduls 30 vorgesehene Lageranordnung hat den Vorteil, dass auch bei Verwendung eines relativ langen Übergaberohrs 102 immer noch eine vibrations- und schwingungsfreie Anordnung der Fluidübergabe aus dem stationären Abschnitt in den rotierenden Bereich der Motorspindel 10 möglich ist.

Ein Aspekt der vorliegenden Erfindung besteht darin, das Drehdurchführungsmodul 30 separat als eine Baugruppe auszugestalten, sodass dieses als eine Einheit handhabbar und bei Bedarf aus dem Einsatzteil 24 zu Wartungs-, Reparatur- oder Austauschzwecken entnehmbar ist.

Ein weiterer Aspekt der Erfindung besteht darin, dass das Drehdurchführungsmodul 30 in axialer Richtung nicht mit dem Ringzylinder 26 überlappt, sondern in axialer Richtung in einem Abstand d zu dem in Figur 1 rechten Ende des Ringzylinders angeordnet ist. Dies hat den Vorteil, dass die Dimensionierung des Ringzylinders 26 und des darin geführten Spannkolbens 28 unabhängig von der Implementierung der Drehdurchführung des Kühlfluids möglich ist. Dadurch ergeben sich auch erhebliche Vorteile bezüglich der Wartung, weil die Drehdurchführung für die innere Kühlmittelzufuhr nicht innerhalb der Motorspindel 10 durch eine komplizierte Anordnung mehrerer Bauteile realisiert ist, sondern durch Handhabung eines separaten Moduls möglich ist.

Ferner erkennt man in Figur 1 einen Sensor 110 zur Abfrage der aktuellen axialen Stellung des Flanschteils 54. Darüber lässt sich der aktuelle Zustand des Spannmechanismus 56 und die erfolgreiche Aufnahme oder Freigabe eines Werkzeugs abfragen.

Darüber hinaus erkannt man in unmittelbarer Nähe ein auf der Spindelwelle 48 zur gemeinsamen Drehung fixiertes Drehgeberzahnrad 112, das mit einem im Gehäuseteil 22 angeordneten Drehsensor 114 zur Erfassung der Drehzahl der Spindelwelle 48 zusammenwirkt.

Schließlich erkennt man in Figur 1 noch einen Klemmmechanismus 120, der dazu vorgesehen ist, den Rotor 46 der Motorspindel 10 im Bedarfsfalle gegenüber dem Spindelgehäuse 14 festzulegen. Hierzu ist an einem sich radial auswärts erstreckenden Kragen 122 der Spindelwelle 48 eine radial verlaufende elastisch verformbare Klemmplatte 124 über eine Mehrzahl von in Umfangsrichtung gleichmäßig verteilten Schrauben 125 fixiert. Das Spindelgehäuse 14 bildet zusammen mit dem Lagergehäuse 60 eine Hydraulikkammer, in der dichtend ein Klemmkolben 126 in axialer Richtung verlagerbar geführt ist. Der Klemmkolben 126 stützt sich über eine Mehrzahl von axial wirkenden Rückstellfedern 128 in die in Figur 1 gezeigte Ruhelage an einem Radialeinsatz verlaufenden Kragen 130 des Spindelgehäuses 14 ab. Die Klemmplatte 124 endet radial innerhalb der Rückstellfedern 128 und interferiert mit diesen nicht. Der Klemmkolben 126 weist einen Klemmabschnitt 132 auf, mit dem dieser gegen die Klemmplatte 124 drückbar ist.

Um die Spindelwelle 48 und damit den Rotor 46 gegenüber dem Spindelgehäuse 14 drehfest zu halten, kann die Hydraulikkammer mit Hydraulikfluid beaufschlagt werden, sodass der Klemmkolben 126 gegen die Wirkung der Rückstellfedern 128 in Figur 1 nach rechts gedrückt wird. Dabei drückt er mittels des Klemmabschnitts 132 stirnseitig auf die mit der Spindelwelle 48 drehfest verschraubte Klemmplatte 124 und verformt sie elastisch, wobei sie gegen die ihr zugewandte seitlichen Fläche des radial einwärts verlaufenden Kragens 130 des Spindelgehäuses 14 gedrückt wird. Die Anpresskraft wird derart stark gewählt, dass die zwischen der angedrückten Klemmplatte 124 und der korrespondierenden Oberfläche des Kragens 130 wirkende Haftreibung ausreichend stark ist, um die Spindelwelle 48 drehfest im Spindelgehäuse 14 zu halten. Dadurch ist es möglich, ein in dem Werkzeugspannmechanismen 56 aufgenommenes Werkzeug, beispielsweise ein Drehmeißel, für bestimmte Bearbeitungsschritte - soweit erforderlich - drehfest in der Motorspindel 10 zu halten. Anschließend kann die Hydraulikkammer wieder durch Freigabe des Hydraulikfluids entleert werden, wobei sich unter Wirkung der Rückstellfedern 128 der Klemmkolben 126 seine in Figur 1 gezeigte Ausgangsstellung zurück bewegt und dabei die Klemmplatte 124 freigibt. Diese entspannt sich elastisch und löst den Reibungseingriff mit dem Kragen 130.

Der Aspekt der Klemmung des Rotors 46 mittels des Klemmmechanismus 120 gemäß der vorliegenden Erfindung ist separat von den vorstehend beschriebenen Aspekten zu verstehen und kann auch in Motorspindeln eingesetzt werden, die ohne innere Kühlmittelzufuhr oder/und ohne Drehdurchführungsmodul oder/und ohne Möglichkeit zum einfachen Spindeltausch unter Aufrechterhaltung der Lageranordnung ausgebildet sind.

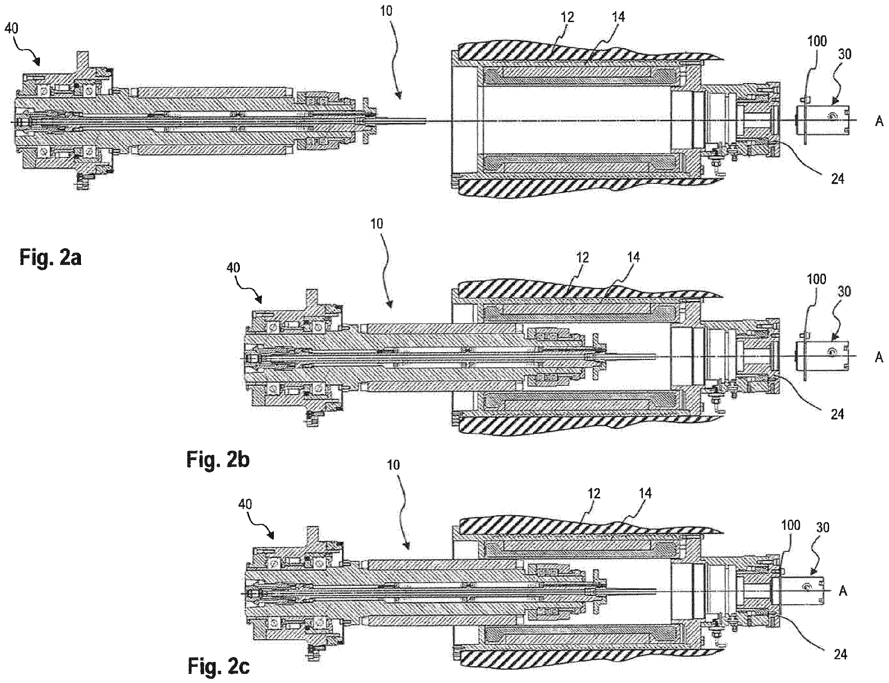

Figuren 2a bis 2c zeigen verschiedene Montagezustände der erfindungsgemäßen Motorspindel 10.

In Figur 2a ist das Spindelgehäuse 14 mit seinem Stator 16 in der Werkzeugmaschine 12 eingesetzt. Die Spindelanordnung 40 ist aus der Baugruppe bestehend aus Spindelgehäuse 14 und Stator 16 in axialer Richtung als Ganzes entnommen, wobei die Lageranordnungen 42 und 44 in ihrem montierten Zustand vollständig erhalten bleiben. Auch das Drehdurchführungsmodul 30 ist durch Lösen der Fixierplatte 100 vom Einsatzteil 24 entfernt worden.

Figur 2b zeigt einen Zustand, in dem die Spindelanordnung 40 teilweise in die Baugruppe bestehend aus Spindelgehäuse 14 und Stator 16 eingesetzt ist. Das Drehdurchführungsmodul 30 ist immer noch von dem Einsatzteil 24 separiert.

Figur 2c zeigt einen Zustand, in dem das Drehdurchführungsmodul 30 in das Einsatzteil 24 eingesetzt ist, wobei die Spindelanordnung 40 immer noch lediglich teilweise in das Spindelgehäuse 14 eingeschoben ist.

Die Figuren 2a bis 2c zeigen, dass die Spindelanordnung 40 und das Drehdurchführungsmodul 30 als separate Baugruppen handhabbar sind.

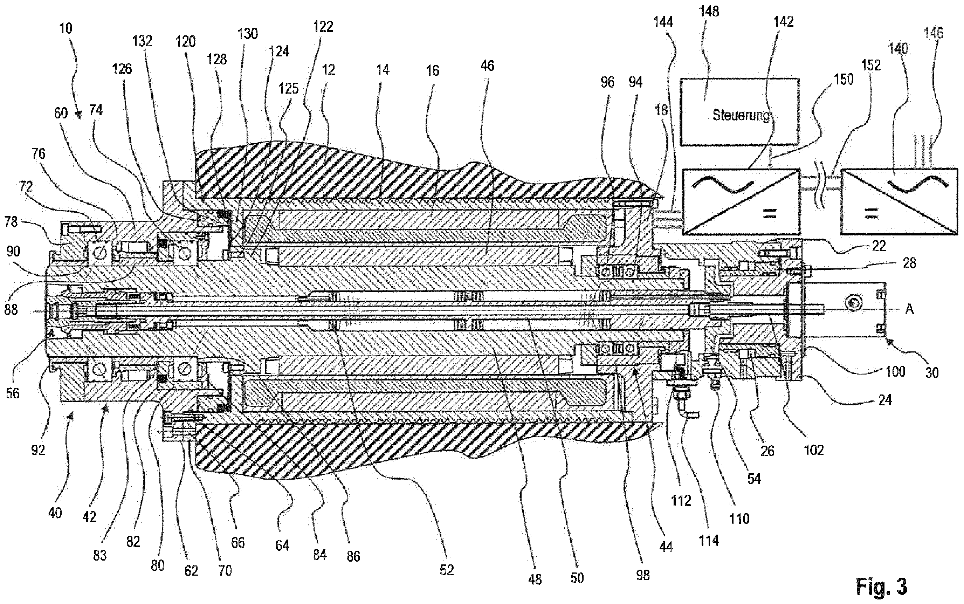

Figur 3 zeigt eine zweite Ausführungsvariante der Erfindung, die hinsichtlich des Aufbaus der Motorspindel 10 identisch zu der ersten Ausführungsform gemäß Figur 1 ausgebildet ist, weshalb für die gleichen Komponenten die gleichen Bezugszeichen verwendet werden. In Einzelfällen ist es in der Automatisierungstechnik erforderlich, Maschinen mit einem Umrichter oder einer Kombination aus einem Gleichrichter und einem Umrichter auszugestalten. Aus diesem Grund sieht die zweite Ausführungsform der Erfindung vor, eine Kombination aus einem Gleichrichter 140 und einem Umrichter 142 unmittelbar am Spindelgehäuse 14 fest anzuordnen. Der auf den integrierten elektromotorischen Antrieb der Motorspindel 10 abgestimmte Umrichter 142 ist mit der Motorspindel 10 über eine Versorgungsleitung 144 verbunden. Der Gleichrichter 140 ist mit dem Stromnetz über eine Versorgungsleitung 146 verbunden. Ferner erkennt man noch eine Steuerung 148, die über eine Steuerleitung 150 mit dem Wechselrichter 142 verbunden ist. Gleichrichter 140 und Umrichter 142 sind über eine Verbindungsleitung 152 miteinander verbunden.

Es ist alternativ möglich, lediglich den Umrichter 142 in der Werkzeugmaschine bzw. der Motorspindel unmittelbar zugeordnet zu integrieren, wobei die Steuerung 148 und der Gleichrichter 140 entfernt, d. h. nicht integriert angeordnet sind.

Diese Ausführungsvariante mit integriertem Umrichter 142, gegebenenfalls zusätzlich mit integriertem Gleichrichter 140 und integrierter Steuerung 148 bietet den Vorteil, dass die jeweilige Umrichter-Anordnung im Falle eines Wechsels der Spindelanordnung 40 wiederum am Spindelgehäuse 14 in der Werkzeugmaschine 12 verbleiben kann und nicht mit getauscht werden muss. Dies erleichtert die Handhabung zusätzlich.

## Patentansprüche

1. Motorspindel (10) für eine Maschine, insbesondere für eine Werkzeugmaschine (12), umfassend:
- ein Spindelgehäuse (14) zur stationären Anbringung an der Maschine,
- eine aus dem Spindelgehäuse (14) entnehmbare Spindelanordnung (40) mit einem in einer integrierten Lageranordnung (42, 44) relativ zum Spindelgehäuse (14) drehbar gelagerten Rotor (46), und
- einen Spannmechanismus (56) für ein Werkzeug, der über einen in dem Spindelgehäuse (14) in einem Ringzylinder (26) bewegbaren Spannkolben (28) betätigbar ist,
wobei die Spindelanordnung (40) mit einer inneren Kühlung ausgebildet ist, die über eine Kühlmittelzufuhr mit einem Kühlfluid versorgbar ist, wobei die Kühlmittelzufuhr eine Drehdurchführung aufweist, die eine Schnittstelle zwischen einem stationären Bauteil und einem rotierenden Bauteil der Kühlmittelzufuhr aufweist,
und wobei die Lageranordnung (42, 44) bei einer Entnahme der Spindelanordnung (40) aus dem Spindelgehäuse (14) mit entnehmbar ist,
**dadurch gekennzeichnet, dass** die Drehdurchführung als ein Drehdurchführungsmodul (30) ausgebildet ist, das in einem Bereich an dem Spindelgehäuse (14) angeordnet ist, der axial außerhalb des Ringzylinders (26) liegt.

2. Motorspindel (10) nach Anspruch 1, **dadurch gekennzeichnet,**
**dass** die Lageranordnung (42, 44) eine - in axialer Richtung betrachtet - nahe dem Drehdurchführungsmodul (30) angeordnete erste Lagerbaugruppe (42) und eine von dem Drehdurchführungsmodul (30) entfernt angeordnete zweite Lagerbaugruppe (44) aufweist, über die sich der Rotor (46) relativ zu dem Spindelgehäuse (14) abstützt.

3. Motorspindel (10) nach Anspruch 1 oder 2, **dadurch gekennzeichnet,**
**dass** die erste und die zweite Lagerbaugruppe (42, 44) jeweils eine im eingebauten Zustand drehfeste angeordnete Lagerbuchse (60, 98) aufweisen, in der die jeweilige Lagerbaugruppe (42, 44) aufgenommen ist, wobei die Lagerbuchse (60, 98) jeweils bei einer Entnahme der Spindelanordnung (40) aus dem Spindelgehäuse (14) mit entnehmbar ist.

4. Motorspindel (10) nach einem der vorangehenden Ansprüche, **dadurch gekennzeichnet,**
**dass** die erste und die zweite Lagerbaugruppe (42, 44) jeweils ein Paar von Wälzlagern (72, 74; 94, 96) aufweist, die in vorbestimmter Ausrichtung zueinander angeordnet sind,
wobei optional das Paar von Wälzlagern (72, 74; 94, 96) jeweils zwei Schrägkugellager aufweist, die in einer X-Anordnung oder in einer O-Anordnung in der jeweiligen Lagerbuchse (60, 98) aufgenommen sind,
wobei bevorzugt das Paar von Wälzlagern (72, 74; 94, 96) in einer fest zueinander verspannten Anordnung in der jeweils zugeordneten Lagerbuchse (60, 98) aufgenommen ist.

5. Motorspindel (10) nach Anspruch 3 oder 4, **dadurch gekennzeichnet,**
**dass** die Lagerbuchse (60, 98) mit wenigstens einer federvorgespannten oder/und hydraulisch betätigbaren oder/und pneumatisch betätigbaren Lagerspannvorrichtung Lagerspannvorrichtung für den Betrieb der Motorspindel (10) vorspannbar ist.

6. Motorspindel (10) nach einem der vorangehenden Ansprüche, **dadurch gekennzeichnet,**
**dass** die Spindelanordnung (40) mit einem axialen Übergaberohr (102) ausgebildet ist, das sich im montierten Zustand durch den Spannkolben (28) hindurch in das Drehdurchführungsmodul (30) hinein erstreckt.

7. Motorspindel (10) nach einem der vorangehenden Ansprüche, **dadurch gekennzeichnet,**
**dass** das Drehdurchführungsmodul (30) eine Drehdurchführungs-Lageranordnung aufweist, die das rotierende Bauteil der Kühlmittelzufuhr mittelbar oder unmittelbar gegenüber dem Spindelgehäuse (14) lagert.

8. Motorspindel (10) nach Anspruch 6 und 7, **dadurch gekennzeichnet,**
**dass** das Übergaberohr (102) in dem Drehdurchführungsmodul (30) in dem rotierenden Bauteil aufgenommen und über dieses gelagert ist,
wobei optional die Drehdurchführungs-Lageranordnung (42, 44) wenigstens ein Wälzlager oder Gleitlager aufweist.

9. Motorspindel (10) nach einem der vorangehenden Ansprüche, **dadurch gekennzeichnet,**
**dass** die Drehdurchführung dazu ausgebildet ist, das rotierende Bauteil und das stationäre Bauteil unter Federkraft oder/und hydraulisch oder/und pneumatisch dichtend aneinander zu drücken.

10. Motorspindel (10) nach einem der vorangehenden Ansprüche, **dadurch gekennzeichnet,**
**dass** das Drehdurchführungsmodul (30) mittels eines Montageflansches (100) an das Spindelgehäuse (14) stirnseitig angeflanscht ist.

11. Motorspindel (10) nach einem der vorangehenden Ansprüche, **dadurch gekennzeichnet,**
**dass** der Rotor (46) an einem radial äußeren Abschnitt (126) mit einem Klemmelement (124) versehen ist, das über einen hydraulisch oder pneumatisch oder elektromagnetisch betätigbaren Aktuator (126) gegen einen Halteabschnitt des Spindelgehäuses (130) zum drehfesten Festlegen des Rotors (46) relativ zum Spindelgehäuse (14) klemmbar ist,
wobei optional das Klemmelement als eine mit dem Rotor (46) drehfest verbundene radial verlaufende deformierbare Klemmplatte (124) ausgebildet ist, die über den Aktuator (126) in klemmenden Eingriff mit dem Halteabschnitt (130) bringbar ist.

12. Motorspindel (10) nach Anspruch 10 oder 11, **dadurch gekennzeichnet**,
der Aktuator in Form eines Kolbens (126) ausgebildet ist, der in eine das Klemmelement (124) freigebende Stellung vorgespannt und durch Beaufschlagung mit einem hydraulischen oder pneumatischen Fluid betätigbar ist.

13. Motorspindel (10) nach einem der vorangehenden Ansprüche, **dadurch gekennzeichnet,**
**dass** das Spindelgehäuse (14) mit einem integrierten elektrischen Umrichter (140; 142) ausgebildet ist, wobei der Umrichter (140; 142) bei einer Entnahme der Spindelanordnung (40) aus dem Spindelgehäuse (14) am Spindelgehäuse (14) verbleibt.

14. Werkzeugmaschine (12), ausgebildet mit einer Motorspindel (10) nach einem der vorangehenden Ansprüche.

15. Verfahren zum Einsetzen und Entnehmen einer Spindelanordnung (40) aus einem Spindelgehäuse (14) bei einer Motorspindel (10) nach einem der Ansprüche 1 bis 13, wobei der Rotor (46) samt seiner Lageranordnung (42, 44) aus dem Spindelgehäuse (14) entnehmbar ist und wobei ferner das Drehdurchführungsmodul (30) unabhängig von dem Rotor (46) von dem Spindelgehäuse (14) entfernbar und an diesem anbringbar ist.
